(19) Europäisches Patentamt
European Patent Office
Office européen des brevets

(11) EP 4 425 681 B1

(12) **EUROPEAN PATENT SPECIFICATION**

(45) Date of publication and mention of the grant of the patent:
**30.09.2026 Bulletin 2026/40**

(21) Application number: **24153096.3**

(22) Date of filing: **22.01.2024**

(51) International Patent Classification (IPC):
***H01M 50/446*** *(2021.01)* ***H01M 50/403*** *(2021.01)*
***H01M 50/417*** *(2021.01)* ***H01M 50/42*** *(2021.01)*
***H01M 50/426*** *(2021.01)* ***H01M 50/443*** *(2021.01)*
***H01M 50/449*** *(2021.01)* ***H01M 50/489*** *(2021.01)*
*H01M 10/052* *(2010.01)*

(52) Cooperative Patent Classification (CPC):
**H01M 50/403; H01M 50/417; H01M 50/42; H01M 50/426; H01M 50/443; H01M 50/446; H01M 50/449; H01M 50/489;** H01M 10/052; Y02E 60/10

(54) **A SPERATOR FOR AN ELECTROCHEMICAL DEVICE, AN ELECTROCHEMICAL DEVICE COMPRISING THE SAME AND A MANUFACTURING METHOD THEREOF**

BELÜFTER FÜR EINE ELEKTROCHEMISCHE VORRICHTUNG, ELEKTROCHEMISCHE VORRICHTUNG DAMIT UND HERSTELLUNGSVERFAHREN DAFÜR

SÉPARATEUR POUR DISPOSITIF ÉLECTROCHIMIQUE, DISPOSITIF ÉLECTROCHIMIQUE LE COMPRENANT ET SON PROCÉDÉ DE FABRICATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.02.2023 KR 20230026494**
**18.01.2024 KR 20240007841**

(43) Date of publication of application:
**04.09.2024 Bulletin 2024/36**

(60) Divisional application:
**26196693.1**

(73) Proprietor: **LG Energy Solution, Ltd.**
**Seoul 07335 (KR)**

(72) Inventors:
- **KA, Kyung Ryun**
  **34122 Daejeon (KR)**
- **SUNG, Dong Wook**
  **34122 Daejeon (KR)**
- **KIM, Min Ji**
  **34122 Daejeon (KR)**
- **LEE, Seung Hyun**
  **34122 Daejeon (KR)**
- **HWANG, Seon Woo**
  **34122 Daejeon (KR)**

(74) Representative: **Goddar, Heinz J.**
**Boehmert & Boehmert Anwaltspartnerschaft mbB**
**Pettenkoferstrasse 22**
**80336 München (DE)**

(56) References cited:
**WO-A1-2022/071775**
**KR-A- 20160 118 979**
**US-A1- 2018 123 106**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

## TECHNICAL FIELD

The present disclosure claims the benefit of the filing date of Korean Patent Application No. 10-2023-0026494, filed with the Korean Intellectual Property Office on February 28, 2023 and the benefit of the filing date of Korean Patent Application No. 10-2024-0007841, filed with the Korean Intellectual Property Office on January 18, 2024. The present disclosure relates to a separator for an electrochemical device, an electrochemical device comprising the same, and a method for manufacturing the same, and specifically, to a separator for an electrochemical device, which can improve (decrease) resistance and maintain porosity after lamination by including a polyvinylidene-based binder containing a low content of hexafluoropropylene and/or a polyolefin-based binder, an electrochemical device comprising the same, and a method for manufacturing the same.

## BACKGROUND

A separator among the components of an electrochemical device includes a polymer substrate having a porous structure located between a cathode and an anode, and serves to isolate the cathode and the anode, prevent electrical short circuit between the two electrodes, and pass an electrolyte and ions. The separator itself does not participate in the electrochemical reaction, but physical properties such as wettability to the electrolyte, degree of porosity, thermal shrinkage ratio, and the like affect the performance and safety of the electrochemical device.

Accordingly, various methods have been attempted to change the physical properties of the coating layer by adding a coating layer to a porous polymer substrate and adding various materials to the coating layer in order to enhance the physical properties of the separator. For example, an inorganic material may be added to the coating layer in order to improve (increase) mechanical strength of the separator, or an inorganic material or hydrate may be added to the coating layer in order to improve flame retardancy and heat resistance of the polymer substrate.

The separator may be bonded to an electrode through a lamination process, and a binder resin may be added to a slurry for the coating layer of the separator in order to secure adhesive force between the electrode and the separator.

Meanwhile, when an acrylic binder is contained in the coating layer or a poly(vinylidene fluoride) (PVdF) based binder is used, there has been a problem in that the resistance increases. Further, there has been a problem in that resistance increases at the interface of the coating layer due to a phenomenon in which the binder contained in the coating layer is formed into a film in the lamination process of bonding the electrode and the separator.

Therefore, research on a technology in which the porosity of the coating layer is not reduced and the resistance of the separator itself is not increased even if the lamination process is performed has been needed.

KR 2016 0118979 A discloses a separator for a lithium secondary battery comprising: a porous polymer substrate having a plurality of pores; and a porous coating layer formed on at least one surface of the porous polymer substrate and including an organic polymer particle, a plurality of inorganic particles, and a binder polymer, wherein the organic polymer particle protrudes from the porous coating layer in an embossed form.

WO 2022/071775 A1 discloses a separator for a lithium secondary battery, a method for manufacturing same, and a secondary battery comprising same. Specifically, a porous coating layer is divided into an upper layer, an intermediate layer, and a lower layer; the content of a particulate binder polymer in the upper layer is greater than the content of a particulate binder polymer in the lower layer; and the porous coating layer includes a carboxyl group and a glycol group as a dispersant.

US 2018/123106 A1 discloses a composite separator for an electrochemical element and the electrochemical element including the same.

## SUMMARY

The technical problem to be achieved by the present disclosure is to provide a separator for an electrochemical device, overcoming drawbacks of the prior art, especially a separator for an electrochemical device that can prevent an increase in the resistance of the interface due to the film formation of the binder contained in the coating layer, which occurs in the step of laminating the electrode and the separator during the process of manufacturing a secondary battery, and can prevent an increase in the resistance of the separator due to the use of an acrylic binder, an electrochemical device comprising the same, and a method for manufacturing the same.

However, the problem to be solved by the present disclosure is not limited to the above-mentioned problem, and other problems not mentioned will be clearly understood by those skilled in the art from the following description.

The above problems are solved in accordance with the subject-matter of the independent claims. Further embodiments result from the sub-claims and the following description.

In a first embodiment of the present disclosure provides a separator for an electrochemical device, including: a

porous polymer substrate; and a coating layer provided on at least one surface of the porous polymer substrate; wherein the coating layer comprises a first polymer binder in the form of particles, a second polymer binder in the form of particles, and inorganic particles; and the second polymer binder is selected from the group consisting of a polyvinylidene-based binder having a content of hexafluoropropylene (HFP) of less than 10% by weight, with respect to the total weight of the polyvinylidene-based binder, a polyolefin-based binder, and a combination thereof; wherein - the amount of the inorganic particles (135) in a region of the coating layer (130) adjacent to the porous polymer substrate (110) is larger than the amount of the inorganic particles (135) in a region of the coating layer (130) opposed to the porous polymer substrate (110); - the amount of the first polymer binder and the second polymer binder in a region of the coating layer (130) adjacent to the porous polymer substrate

(110) is smaller than the amount of the first polymer binder and the second polymer binder in a region of the coating layer (130) opposed to the porous polymer substrate (110); wherein the region of the coating layer (130) adjacent to the porous polymer substrate (110) is the half of the coating layer (130) adjacent to the porous polymer substrate (110); and the region of the coating layer (130) opposed to the porous polymer substrate (110) is the half of the coating layer (130) further away from the porous polymer substrate (110); if the coating layer (130) is divided into two halves with respect to the thickness of the coating layer (130); the total content of the inorganic particles in the coating layer is 70 parts by weight or more based on 100 parts by weight of the coating layer; the first polymer binder and the second polymer binder contained in the coating layer have a weight ratio from 4:6 to 6:4; and the first polymer binder is an acrylic binder.

According to a second embodiment, in the first embodiment, the coating layer may further comprise a region comprising the first polymer binder in the form of a film.

According to a third embodiment of the present disclosure, in any of the first to the second embodiments, the polyvinylidene-based binder may be a polyvinylidene fluoride-based binder.

According to a fourth embodiment, in any of the first to the third embodiments, the polyolefin-based binder may be polyethylene.

According to a fifth embodiment of the present disclosure, in any of the first to the fourth embodiments, the total content of the first polymer binder and the second polymer binder in the coating layer may be 30 parts by weight or less based on 100 parts by weight of the coating layer.

According to sixth embodiment of the present disclosure, in any of the first to the fifth embodiments, the coating layer may have a porosity of 33% by volume or more, preferably more than 33 % by volume.

According to an seventh embodiment of the present disclosure, in any of the first to the sixth embodiments, the polyvinylidene-based binder having a content of hexafluoropropylene of less than 10% by weight may be an aqueous binder.

According to a eighth embodiment of the present disclosure, in any of the first to the seventh embodiments, the coating layer may have a dry adhesive force of 30 gf/25 mm or more.

In a ninth embodiment, the present disclosure provides an electrochemical device including: a cathode; an anode; and a separator, wherein the separator is the separator for an electrochemical device according to any of the first to the eighth embodiments; and the separator is interposed between the cathode and the anode.

In a tenth embodiment, the present disclosure provides a method for manufacturing a separator for an electrochemical device according to any of the first to the eighth embodiments, including the steps of: mixing a slurry for preparing a coating layer, containing a first polymer binder in the form of particles, a second polymer binderin the form of particles , and inorganic particles; applying the slurry for preparing a coating layer to at least one surface of a porous polymer substrate; and drying the slurry for preparing a coating layer to form the coating layer, wherein the second polymer binder is selected from a polyvinylidene-based binder having a content of hexafluoropropylene of less than 10% by weight, a polyolefin-based binder, and a combination thereof.

According to a eleventh embodiment of the present disclosure, in the tenth embodiment, the step of performing mixing may be performing mixing for 1 hour or more and 3 hours or less.

According to a twelfth embodiment of the present disclosure, in the tenth embodiment or the eleventh embodiment, the first polymer binder may be one selected from the group consisting of an acrylic binders; a polyvinylidene-based binder; a hybrid binder containing an acrylic binder and a polyvinylidene-based binder; and combinations thereof, and the drying is drying at a temperature which differs from the glass transition temperature of the first polymer binder by not more than 20°C.

In the separator for an electrochemical device according to one embodiment of the present disclosure, porosity does not decrease even after lamination with an electrode, and an increase in resistance of the separator can be prevented.

The electrochemical device according to one embodiment of the present disclosure can improve energy efficiency by reducing resistance of the separator.

The method for manufacturing an electrochemical device according to one embodiment of the present disclosure can easily prevent an increase in the resistance of the separator, and can allow the polymer binder particles to support the pressure applied in the process of lamination with the electrode to prevent a decrease in porosity of the separator.

## BRIEF DESCRIPTION OF THE DRAWINGS

FIG. 1 is a schematic view showing that the porosity of a separator for an electrochemical device according to one embodiment of the present disclosure is maintained after lamination.

FIG. 2 is a flowchart of a method for manufacturing a separator for an electrochemical device according to one embodiment of the present disclosure.

FIG. 3 is a schematic view of an electrochemical device according to one embodiment of the present disclosure.

## DETAILED DESCRIPTION

Hereinafter, various embodiments of the present disclosure will be described in detail so that those ordinarily skilled in the art to which the present disclosure pertains can easily carry out the present disclosure. However, these are only examples given for illustrative purposes, and the scope of the present disclosure is not intended to be limited to the following contents.

Unless otherwise restricted, a detailed description defining or specifying the elements may be applied to all inventions, and is not limited to descriptions of particular inventions. That is, the present disclosure also refers to combinations of the embodiments even if they are disclosed separately. Additionally, unless explicitly stated otherwise, a singular form includes a plural form throughout the detailed description and the appended claims.

1 gf/25mm corresponds to 0.3923 N/m.

In this specification, when a part is said to "include" a certain component, it means that it may further include other components without excluding other components unless specifically stated otherwise. However, unless explicitly stated otherwise, "comprising" or "including" or the like includes "essentially comprising" and "consisting of".

The term "essentially comprises" as used herein has the meaning of "comprising at least 70 %", preferably of "comprising at least 80 %", most preferred of "comprising at least 90 %". If reference is made to the amount of a constituent in a mixture of material, % is wt %, relative to the total weight of the respective mixture. For example, a material essentially comprising polyethylene comprises the polyethylene in an amount of at least 70 wt% with respect to the total weight of the material.

In this specification, "A and/or B" means "A and B, or A or B".

In this specification, when one component is said to be provided "on" other component, unless specifically stated otherwise, this does not exclude that another component is disposed therebetween, but means that another component may be further disposed therebetween. However, unless explicitly stated otherwise, "on" encompasses the meaning "directly on", that is, the situation in which no other component(s) may be further disposed therebetween.

In this specification, the property of "having pores" or being "porous" means that an object contains a plurality of pores, and thus a gas-phase fluid and/or a liquid-phase fluid can pass from one side of the object to the other side thereof by a structure in which the pores are connected to each other.

In this specification, the separator has a porous property containing a plurality of pores, and serves as a porous ion-conducting barrier to pass ions while blocking electrical contact between an anode and a cathode in an electrochemical device.

Hereinafter, the present disclosure will be described in more detail.

One embodiment of the present disclosure provides a separator 100 for an electrochemical device, including: a porous polymer substrate 110 and a coating layer 130. The coating layer 130 is provided on at least one surface of the porous polymer substrate 110, that is, either on surface or on both surfaces of the porous polymer substrate 110. The coating layer 130 comprises, essentially comprises or consists of a first polymer binder in the form of particles 131, second polymer binder in the form of particles 133, and inorganic particles 135. wherein the second polymer binder is selected from the group consisting of a polyvinylidene-based binder having a content of hexafluoropropylene (HFP) of less than 10% by weight, with respect to the total weight of the polyvinylidene-based binder, a polyolefin-based binder, and a combination thereof.

In the separator 100 for an electrochemical device according to one embodiment of the present disclosure, porosity does not decrease even after lamination with an electrode, and an increase in resistance of the separator can be prevented.

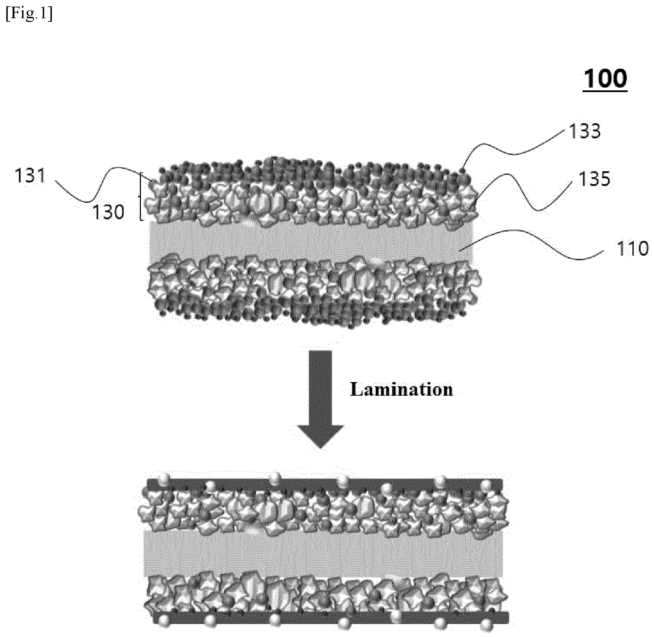

FIG. 1 is a schematic view showing that the porosity of a separator 100 for an electrochemical device according to one embodiment of the present disclosure is maintained after lamination.

Referring to FIG. 1, the separator 100 for an electrochemical device, which is one embodiment of the present disclosure, will be described in detail.

According to one embodiment of the present disclosure, the separator 100 for an electrochemical device includes a porous polymer substrate 110. As described above, since the separator 100 for an electrochemical device includes the

porous polymer substrate 110, it allows lithium ions to pass through while blocking electrical contact between the cathode and the anode, and enables a shutdown function to be implemented at an appropriate temperature.

According to one embodiment of the present disclosure, the porous polymer substrate 110 may be manufactured by using a, that is, comprise, essentially comprise or concsist of polyolefin-based resin as a base resin. The polyolefin-based resin may, for example, include polyethylene, polypropylene, polypentene, and the like, and may include essentially comprise or concsist of, one or more thereof. Preferably, the porous polymer substrate consists of polyethylene resin. A porous separator, that is, a separator having a large number of pores, prepared using such a polyolefin-based resin as a base resin, may impart a shutdown function at an appropriate temperature.

According to one embodiment of the present disclosure, the polyolefin-based resin may have a weight average molecular weight of 500,000 g/mol or more and 1,500,000 g/mol or less, such as about 900,000 g/mol. Compression resistance of the separator may be improved by adjusting the weight average molecular weight of the polyolefin-based resin within the above-described range. Furthermore, when different kinds of polyolefin-based resins are mixed and used or when a separator is formed in a multilayer structure made of different kinds of polyolefin-based resins, the weight average molecular weight of the polyolefin-based resin may be calculated by adding the weight average molecular weights according to the content ratios of the respective polyolefin-based resins.

In this specification, "weight average molecular weight (Mw)" may be measured by gel permeation chromatography (GPC, PL GPC220, Agilent Technologies), and the measurement conditions may be set as follows.

- Column: PL Olexis (Polymer Laboratories)
- Solvent: TCB (Trichlorobenzene)
- Flow rate: 1.0 ml/min
- Sample concentration: 1.0 mg/ml
- Injection amount: 200 μl
- Column temperature: 160°C
- Detector: Agilent High Temperature RI detector
- Standard: Polystyrene (correction with cubic function)

According to one embodiment of the present disclosure, the porous polymer substrate 110 may be manufactured by a method (wet method) of performing stretching and heat setting treatment of the resulting material after kneading a polyolefin-based resin with a plasticizer (diluent) at high temperatures to make a single phase, phase-separating the polymer material and the plasticizer in a cooling process, and then extracting the plasticizer to form pores. In addition, the porous polymer substrate using a polyolefin-based resin may include a core portion made of a mixture of polyethylene and polypropylene and a polyethylene skin portion laminated on both surfaces of the core portion.

According to one embodiment of the present disclosure, the average size and maximum size of pores of the separator 100 may be easily adjusted by those skilled in the art to meet the scope of the present disclosure by adjusting the mixing ratio of the plasticizer, the stretching ratio, the heat setting treatment temperature, etc.

According to one embodiment of the present disclosure, the porous polymer substrate may have a thickness of 1 μm or more and 50 μm or less. The thickness of the porous polymer substrate may be 2 μm or more, 3 μm or more, 4 μm or more, 5 μm or more, 6 μm or more, 7 μm or more, or 8 μm or more. The thickness of the porous polymer substrate may be 45 μm or less, 40 μm or less, 35 μm or less, 30 μm or less, 25 μm or less, 20 μm or less, or 15 μm or less. Specifically, the porous polymer substrate may have a thickness of 2 μm or more and 45 μm or less, 3 μm or more and 40 μm or less, 4 μm or more and 35 μm or less, 5 μm or more and 30 μm or less, 6 μm or more and 25 μm or less, 7 μm or more and 20 μm or less, or 8 μm or more and 15 μm or less. The energy density of the battery may be improved by adjusting the thickness of the porous polymer substrate within the above-described range.

According to one embodiment of the present disclosure, the porous polymer substrate may have a porosity of 10% by volume or more and 90% by volume or less. The porosity of the porous polymer substrate may be 10 vol% or more, 20 vol% or more, 30 vol% or more, or 40 vol% or more. The porosity of the porous polymer substrate may be 90 vol% or less, 80 vol% or less, 70 vol% or less, or 60 vol% or less. Specifically, the porous polymer substrate may have a porosity of 10% by volume or more and 90% by volume or less, 20% by volume or more and 80% by volume or less, 30% by volume or more and 70% by volume or less, or 40% by volume or more and 60% by volume or less. The separator permeability of lithium ions may be controlled by adjusting the porosity of the porous polymer substrate within the above-described range.

According to one embodiment of the present disclosure, the separator 100 for an electrochemical device includes a coating layer 130 provided on, preferably directly on, at least one surface of the porous polymer substrate 110. Specifically, the separator 100 for an electrochemical device includes a coating layer 130 provided on, preferably directly on, one or both surfaces of the porous polymer substrate 110. As described above, since the separator 100 for an electrochemical device includes the coating layer 130 provided on, preferably directly on, at least one surface of the porous polymer substrate 110, heat resistance of the separator may be improved, mechanical properties thereof may be improved, and the occurrence of electrical short-circuit of the electrode due to contraction of the separator at high

temperatures may be prevented.

According to one embodiment of the present disclosure, the coating layer 130 includes, essentially comprises or consist of first polymer binder in the form of particles 131, second polymer binder in the form of particles 133, and inorganic particles 135. As described above, since the coating layer 130 includes the first polymer binder in the form of particles 131, the second polymer binder in the form of particles 133, and the inorganic particles 135, heat resistance of the separator may be improved, mechanical properties thereof may be improved, the occurrence of electrical short-circuit of the electrode due to contraction of the separator at high temperatures may be prevented, and pores may be formed in the coating layer.

According to one embodiment of the present disclosure, the coating layer 130 may contain a plurality of pores. Specifically, the coating layer may be a porous coating layer. More specifically, the coating layer may be a porous coating layer containing a plurality of pores therein. As described above, since the coating layer contains a plurality of pores, it may be possible to allow current to flow by passing lithium ions while physically blocking the anode and the cathode.

The coating layer 130 further comprise a region comprising the first polymer binder in the form of a film. Specifically, as it is schematically shown in FIG. 1, the first polymer binder particles 131 used for preparing the coating layer may partially changed into a film form, that is, into a monolithic structure comprising the material of the particles changed this way, when pressure and/or heat is applied in the process of performing lamination with an electrode in the process of preparing an electrochemical device. However, at least a part of the first binder polymer remains in the form of particles.

According to one embodiment of the present disclosure, the inorganic particles 135 may be bound by the first polymer binder, i.e. by the first polymer binder in the form of particles 131 and/or the first polymer binder in the form of a film, and the second polymer binder particles 133 and integrated in the coating layer to form the coating layer 130. The pores inside the coating layer 130 may be due to an interstitial volume, which is an empty space between the inorganic particles.

In the method for manufacturing the separator 100 for an electrochemical device by applying the slurry for the coating layer to at least one surface of the porous polymer substrate, the coating layer 130 may be formed with one time application. Due to the separation between on the one hand, the inorganic particles and, on the other hand, the first polymer binder particles and the second polymer binder, the slurry for the coating layer may have an excessive amount of inorganic particles 135 in the portion close to the porous polymer substrate 110, and may have an excessive amount of the first and second polymer binder in the portion far from the porous polymer substrate 110, which faces the porous polymer substrate 110, so that adhesive force to the electrode may be improved (increased), and porosity of the separator may be improved. In this specification, the presence of the excessive amount may mean the content exceeding 50% by weight in the corresponding portion, and the portion close to the porous polymer substrate 110 and the portion far from the porous polymer substrate 110 may be divided based on an imaginary line occupying 1/2 the thickness of the coating layer.

In the separator 100 for an electrochemical device,

- the amount of the inorganic particles (135) in a region of the coating layer (130) adjacent to the porous polymer substrate (110) is larger than the amount of the inorganic particles (135) in a region of the coating layer (130) opposed to the porous polymer substrate (110);
- the amount of the first polymer binder particles and the second polymer binder particles in a region of the coating layer (130) adjacent to the porous polymer substrate (110) is smaller than the amount of the first polymer binder particles and the second polymer binder particles in a region of the coating layer (130) opposed to the porous polymer substrate (110);

wherein the region of the coating layer (130) adjacent to the porous polymer substrate (110) is the half of the coating layer (130) adjacent to the porous polymer substrate (110); and the region of the coating layer (130) opposed to the porous polymer substrate (110) is the half of the coating layer (130) further away from the porous polymer substrate (110); if the coating layer (130) is divided into two halves with respect to the thickness of the coating layer (130). In this regard, the amount refers to the amount by weight.

According to one embodiment of the present disclosure, the coating layer 130 may be formed to a thickness of 1 μm to 20 μm, 1μm to 10 μm, 1μm to 5 μm, or 1.5 μm to 3 μm, on either side of the porous polymer substrate 110, but is not particularly limited thereto. The thickness may be adjusted within an appropriate range by those skilled in the art in terms of heat resistance or electrical resistance.

In one embodiment of the present disclosure, the thickness of the polymer substrate 110 and/or the coating layer 130 may be measured by applying a contact type thickness meter. As the contact type thickness meter, for example, Mitutoyo's VL-50S-B may be used.

According to one embodiment of the present disclosure, the first polymer binder may have a glass transition temperature (Tg) of 20°C or more and 60°C or less. The glass transition temperature as referred to herein may be determined by using a differential scanning calorimeter (DSC), or the like. Particular examples of DSC instruments include DSC (DSC823, METTLER TOLEDO), DSC (TA Instrument), or the like. Specifically, the first polymer binder may have a glass transition temperature (Tg) of 22°C or more and 58°C or less, 24°C or more and 56°C or less, 26°C or more and 54°C

or less, 28°C or more and 52°C or less, 30°C or more and 50°C or less, 32°C or more and 48°C or less, 34°C or more and 46°C or less, 36°C or more and 44°C or less, or 38°C or more and 42°C or less. The glass transition temperature (Tg) of the first polymer binder is adjusted within the above-described range so that the viscosity of a slurry for preparing the coating layer may be adjusted to improve the convenience of battery manufacturing.

According to one embodiment of the present disclosure, the average diameter ($D_{50}$) of the first polymer binder in the form of particles particles 131 is not particularly limited, but is preferably in a range of 0.1 μm or more and 1 μm or less in order to form a coating layer 130 having a uniform thickness and an appropriate porosity. Specifically, the first polymer binder particles 131 may have an average diameter ($D_{50}$) of 0.2 μm or more and 0.9 μm or less, 0.3 μm or more and 0.8 μm or less, 0.4 μm or more and 0.7 μm or less, or 0.5 μm or more and 0.6 μm or less. The average diameter ($D_{50}$) of the first polymer binder particles 131 is adjusted within the above-described range so that dispersibility in the slurry prepared for coating layer preparation may be improved (increased) and the thickness of the coating layer formed may be reduced.

In this specification, "$D_{50}$ particle diameter" means a particle diameter at the 50% point of the cumulative distribution of the number of particles according to the particle diameter. The particle diameter may be measured using a laser diffraction method. Specifically, after dispersing a powder to be measured in a dispersion medium, it is introduced into a commercially available laser diffraction particle size measuring device (e.g., Microtrac S3500) to measure the difference in diffraction pattern according to the particle size when the particles pass through the laser beam, thereby calculating a particle diameter distribution. The $D_{50}$ particle diameter may be measured by calculating the particle diameter at the point where the particle diameter distribution becomes 50% of the cumulative distribution of the number of particles according to the particle diameter in the measuring device.

According to one embodiment of the present disclosure, the first polymer binder is acrylic binder;. As described above, the first polymer binder is acrylic binder thus the acrylic binder may be partially formed into a film in the process of lamination with an electrode to improve (increase) the adhesive force with the electrode.

According to one embodiment of the present disclosure, the acrylic binder contained in, substantially comprised in or forming the first polymer binder may be a (meth)acrylic acid ester copolymer such as a methacrylic acid ester copolymer, an acrylonitrile acrylic acid ester copolymer, or a styrene acrylic acid ester copolymer; a (meth)acrylic resin; or the like. Specifically, it may be one or more selected from the group consisting of a copolymer of styrene and butyl acrylate, a polymer of ethylhexyl acrylate, polyacrylonitrile, acrylonitrile-styrenebutadiene copolymer, and polybutylacrylate. The acrylic binder contained in, substantially comprised in or forming the first polymer binder is selected from the above-described ones, and thus the acrylic binder may be partially formed into a film in the process of lamination with an electrode, thereby improving adhesive force with the electrode.

According to one embodiment of the present disclosure, the polyvinylidene-based binder contained in, substantially comprised in or forming the first polymer binder may be a polyvinylidene fluoride-based binder. As described above, the polyvinylidene-based binder is selected as the polyvinylidene fluoride-based binder, and thus resistance of the separator may be prevented from increasing or may be reduced.

According to one embodiment of the present disclosure, the polyvinylidene-based binder contained in, substantially comprised in or forming the first polymer binder may have a hexafluoropropylene (HFP) content of 10% by weight or more. Specifically, the polyvinylidene-based binder contained in the first polymer binder particles may have a hexafluoropropylene content of 10% by weight or more and 80% by weight or less, 15% by weight or more and 75% by weight or less, 20% by weight or more 70% by weight % or less, 25% by weight or more and 65% by weight or less, 30% by weight or more and 60% by weight or less, 35% by weight or more and 55% by weight or less, or 40% by weight or more and 50% by weight or less. The content of hexafluoropropylene contained in the polyvinylidene-based binder in the first polymer binder particles is adjusted within the above-described range, and thus resistance of the separator may be prevented from increasing or may be reduced. The content of HFP monomer can be determined by $^{1}H$-NMR and/or $^{19}F$-NMR.

According to one embodiment of the present disclosure, the total content of the first polymer binder and the second polymer binder may be 30 parts by weight or less based on 100 parts by weight of the coating layer 130. The total content of the first polymer binder and the second polymer binder may be more than 0 part by weight, 1 part by weight or more, 2 parts by weight or more, 3 parts by weight or more, 4 parts by weight or more, 5 parts by weight or more, 6 parts by weight or more, 7 parts by weight or more, 8 parts by weight or more, 9 parts by weight or more, 10 parts by weight or more, 11 parts by weight or more, or 12 parts by weight or more, based on 100 parts by weight of the coating layer 130. The total content of the first polymer binder and the second polymer binder may be 28 parts by weight or less, 27 parts by weight or less, 26 parts by weight or less, 25 parts by weight or less, 24 parts by weight or less, 23 parts by weight or less, 22 parts by weight or less, 21 parts by weight or less, 20 parts by weight or less, 19 parts by weight or less, 18 parts by weight or less, 17 parts by weight or less 16 parts by weight or less, 15 parts by weight or less, 14 parts by weight or less, or 13 parts by weight or less based on 100 parts by weight of the coating layer 130. Specifically, the total content of the first polymer binder and the second polymer binder may be more than 0 part by weight and 25 parts by weight or less, 1 part by weight or more and 24 parts by weight or less, 2 parts by weight or more and 23 parts by weight or less, 3 parts by weight or more and 22 parts by weight or less, 4 parts by weight or more and 21 parts by weight or less, 5 parts by weight or more and 20 parts by weight or

less, 6 parts by weight or more and 19 parts by weight or less, 7 parts by weight or more and 18 parts by weight or less, 8 parts by weight or more and 17 parts by weight or less, 9 parts by weight or more and 16 parts by weight or less, 10 parts by weight or more and 15 parts by weight or less, 11 parts by weight or more and 14 parts by weight or less, or 12 parts by weight or more and 13 parts by weight or less based on 100 parts by weight of the coating layer 130. The total content of the first polymer binder and the second polymer binder is adjusted within the above-described range, and thus assembling easiness in the process of assembling the electrode may be improved.

According to one embodiment of the present disclosure, the average diameter ($D_{50}$) of the second polymer binder particles 133 is not particularly limited, but is preferably in a range of 0.1 μm or more and 1 μm or less in order to form a coating layer 130 having a uniform thickness and an appropriate porosity. Specifically, the second polymer binder particles 133 may have an average diameter ($D_{50}$) of 0.2 μm or more and 0.9 μm or less, 0.3 μm or more and 0.8 μm or less, 0.4 μm or more and 0.7 μm or less, or 0.5 μm or more and 0.6 μm or less. The average diameter ($D_{50}$) of the second polymer binder particles 133 is adjusted within the above-described range, and thus dispersibility in the slurry prepared for preparing the coating layer may be improved and the thickness of the coating layer formed may be reduced. In this specification, "$D_{50}$ particle diameter" means a particle diameter at the 50% point of the cumulative distribution of the number of particles according to the particle diameter. The particle diameter may be measured using a laser diffraction method. Specifically, after dispersing a powder to be measured in a dispersion medium, it is introduced into a commercially available laser diffraction particle size measuring device (e.g., Microtrac S3500) to measure the difference in diffraction pattern according to the particle size when the particles pass through the laser beam, thereby calculating a particle diameter distribution. The $D_{50}$ particle diameter may be measured by calculating the particle diameter at the point where the particle diameter distribution becomes 50% of the cumulative distribution of the number of particles according to the particle diameter in the measuring device.

According to one embodiment of the present disclosure, the second polymer binder is one selected from a polyvinylidene-based binder having a content of hexafluoropropylene of less than 10% by weight, a polyolefin-based binder, and a combination thereof. As described above, the second polymer binder is selected as one selected from a polyvinylidene-based binder having a content of hexafluoropropylene of less than 10% by weight, a polyolefin-based binder, and a combination thereof, and thus the porosity of the separator may be maintained. Specifically, referring to FIG. 1, the acrylic binder particles (= first polymer binder in the form of particles 131) are partially changed into a film form by the pressure applied in the process of performing lamination with the electrode to reduce the porosity of the coating layer 130 and interfere with the movement of ions through the pores so that there is a problem of increasing resistance. However, a polyvinylidene-based binder containing a low content of hexafluoropropylene or/and a polyolefin-based binder is selected as described above for the second polymer binder in the form of particles 133, and thus the second polymer binder particles 133 may withstand the pressure applied in the process of performing lamination in the process of lamination with the electrode to maintain the porosity, and through this, allow lithium ions to move through the separator to prevent an increase in resistance.

According to one embodiment of the present disclosure, the polyvinylidene-based binder in the second polymer binder may contain hexafluoropropylene (HFP) in an amount of less than 10% by weight, based on the total weight of the polyvinylidene-based binder. The polyvinylidene-based binder may contain hexafluoropropylene in an amount of 9.9% by weight or less, 9.5% by weight or less, 9.0% by weight or less, 8.5% by weight or less, 8.0% by weight or less, 7.5% by weight or less, 7.0% by weight or less, 6.5% by weight or less, 6.0% by weight or less, or 5.5% by weight or less, based on the total weight of the polyvinylidene-based binder. The polyvinylidene-based binder may contain hexafluoropropylene in an amount of more than 0% by weight, 0.1% by weight or more, 0.5% by weight or more, 1.0% by weight or more, 1.5% by weight or more, 2.0% by weight or more, 2.5% by weight or more, 3.0% by weight or more, 3.5% by weight or, 4.0% by weight or more, or 4.5% by weight or more, based on the total weight of the polyvinylidene-based binder. Specifically, the polyvinylidene-based binder may contain hexafluoropropylene in an amount of more than 0% by weight and less than 10% by weight, 0.1% by weight or more and 9.9% by weight or less, 0.5% by weight or more and 9.5% by weight or less, 1.0% by weight or more and 9.0% by weight or less, 1.5% by weight or more and 8.5% by weight or less, 2.0% by weight or more and 8.0% by weight or less, 2.5% by weight or more and 7.5% by weight or less, 3.0% by weight or more and 7.0% by weight or less, 3.5% by weight or more and 6.5% by weight or less, 4.0% by weight or more and 6.0% by weight or less, or 4.5% by weight or more and 5.5% by weight or less, such as about 5 % by weight, based on the total weight of the polyvinylidene-based binder. The content of hexafluoropropylene contained in the polyvinylidene-based binder is adjusted within the above-described range, and thus the porosity of the separator may be maintained to improve resistance of the separator. In this specification, the degree of substitution of the polyvinylidene-based binder may mean a weight ratio at which hexafluoropropylene is contained. The content of HFP monomer in polyvinylidene-based binder can be determined by $^{1}H$-NMR and/or $^{19}F$-NMR.

According to one embodiment of the present disclosure, the polyvinylidene-based binder in the second polymer binder may be a polyvinylidene fluoride (PVdF)-based binder. As described above, the polyvinylidene-based binder is selected as the polyvinylidene fluoride-based binder, and thus the porosity of the separator may be maintained to improve (decrease) the resistance of the separator. Furthermore, the polyvinylidene-based binder that is the second polymer

binder particles may be the same as or different from the polyvinylidene-based binder contained in the first polymeric binder.

According to one embodiment of the present disclosure, the polyolefin-based binder in the second polymer binder may be polyethylene. As described above, the polyolefin-based binder in the second polymer binder particles 133 is selected as polyethylene, and thus the porosity of the separator may be maintained to improve the resistance of the separator.

The first polymer binder and the second polymer binder contained in the coating layer have a weight ratio of 4:6 to 6:4. The weight ratio of the first polymer binder and the second polymer binder contained in the coating layer is adjusted within the above-described range, and thus the resistance of the separator may be prevented from increasing or may be reduced and assembling easiness in the process of assembling the electrode may be improved.

According to one embodiment of the present disclosure, when the second polymer binder comprises, essentially comprises or consists of a combination of a polyvinylidene-based binder having a content of hexafluoropropylene of less than 10% by weight and a polyolefin-based binder, the polyvinylidene-based binder having a content of hexafluoropropylene of less than 10% by weight and the polyolefin-based binder may have a weight ratio of 1:9 to 9:1. Specifically, when the second polymer binder comprises, essentially comprises or consists of a combination of a polyvinylidene-based binder having a content of hexafluoropropylene of less than 10% by weight and a polyolefin-based binder, the polyvinylidene-based binder having a content of hexafluoropropylene of less than 10% by weight and the polyolefin-based binder may have a weight ratio of 2:8 to 8:2, 3:7 to 7:3, or 4:6 to 6:4. The weight ratio of the polyvinylidene-based binder having a content of hexafluoropropylene of less than 10% by weight and the polyolefin-based binder of the second polymer binder is adjusted within the above-described range, and thus the resistance of the separator may be prevented from increasing or may be reduced and the assembling easiness may be improved in the process of assembling the electrode.

According to one embodiment of the present disclosure, the inorganic particles 135 usable for the coating layer 130 are not particularly limited as long as they are electrochemically stable. That is, inorganic particles that can be used in one embodiment of the present disclosure are not particularly limited as long as they are those that do not undergo oxidation and/or reduction reactions in the operating voltage range (e.g., 0 V to 5 V based on $Li/Li^+$) of an electrochemical device applied.

The inorganic particles 135 are contained in an amount of 70 parts by weight or more based on 100 parts by weight of the coating layer 130. The inorganic particles 135 may be contained in an amount of 72 parts by weight or more, 74 parts by weight or more, 76 parts by weight or more, 78 parts by weight or more, 79 parts by weight or more, 80 parts by weight or more, 81 parts by weight or more, 82 parts by weight or more, 83 parts by weight or more, 84 parts by weight or more, 85 parts by weight or more, 86 parts by weight or more, or 87 parts by weight or more based on 100 parts by weight of the coating layer 130. The inorganic particles 135 may be contained in an amount of less than 100 parts by weight, 99 parts by weight or less, 98 parts by weight or less, 97 parts by weight or less, 96 parts by weight or less, 95 parts by weight or less, 94 parts by weight or less, 93 parts by weight or less, 92 parts by weight or less, 91 parts by weight or less, 90 parts by weight or less, 89 parts by weight or less, or 88 parts by weight or less based on 100 parts by weight of the coating layer 130. Specifically, the inorganic particles 135 may be contained in an amount of 75 parts by weight or more and less than 100 parts by weight, 76 parts by weight or more and 99 parts by weight or less, 77 parts by weight or more and 98 parts by weight or less, 78 parts by weight or more and 97 parts by weight or less, 79 parts by weight or more and 96 parts by weight or less, 80 parts by weight or more and 95 parts by weight or less, 81 parts by weight or more and 94 parts by weight or less, 82 parts by weight or more and 93 parts by weight or less, 83 parts by weight or more and 92 parts by weight or less, 84 parts by weight or more and 91 parts by weight or less, 85 parts by weight or more and 90 parts by weight or less, 86 parts by weight or more and 89 parts by weight or less, or 87 parts by weight or more and 88 parts by weight or less based on 100 parts by weight of the coating layer 130. The content of the inorganic particles 135 is adjusted within the above-described range, the heat resistance of the separator may be improved.

For example, when inorganic particles with high permittivity are used, the inorganic particles contribute to an increase in dissociation of an electrolyte salt, for example, a lithium salt in a liquid electrolyte, thereby improving the ionic conductivity of electrolyte solution. For the reasons described above, the inorganic particles may be inorganic particles having a dielectric constant greater than or equal to 5, inorganic particles having lithium-ion transport ability, or a mixture thereof.

According to one embodiment of the present disclosure, nonlimiting examples of the inorganic particles 135 may include $BaTiO_3$, $Pb(Zr,Ti)O_3$ (PZT), $Pb_{1-x}La_xZr_{1-y}Ti_yO_3$ (PLZT, $0<x<1$, $0< y<1$), $Pb(Mg_{1/3}Nb_{2/3})O_3$-$PbTiO_3$ (PMN-PT), Hafnia ($HfO_2$), $SrTiO_3$, $SnO_2$, $CeO_2$, MgO, $Mg(OH)_2$, NiO, CaO, ZnO, $ZrO_2$, $SiO_2$, $Y_2O_3$, $Al_2O_3$, SiC, $Al(OH)_3$, $TiO_2$, aluminum peroxide, zinc tin hydroxide ($ZnSn(OH)_6$), tin-zinc oxide ($Zn_2SnO_4$, $ZnSnO_3$), antimony trioxide ($Sb_2O_3$), antimony tetraoxide ($Sb_2O_4$), antimony pentoxide ($Sb_2O_5$), and the like, and may include one, or two or more thereof.

The total content of the inorganic particles 135 in the coating layer 130 is 70 parts by weight or more based on 100 parts by weight of the coating layer 130. The total content of the inorganic particles 135 in the coating layer 130 may be 71 parts by weight or more, 72 parts by weight or more, 73 parts by weight or more, or 74 parts by weight or more, based on 100 parts by weight of the coating layer 130. The total content of the inorganic particles 135 in the coating layer 130 may be 95

parts by weight or less, 90 parts by weight or less, 85 parts by weight or less, 80 parts by weight or less, or 76 parts by weight or less based on 100 parts by weight of the coating layer 130. Specifically, the total content of the inorganic particles 135 in the coating layer 130 may be 71 parts by weight or more and 90 parts by weight or less, 72 parts by weight or more and 85 parts by weight or less, 73 parts by weight or more and 80 parts by weight or less, or 74 parts by weight or more and 76 parts by weight or less, based on 100 parts by weight of the coating layer 130. The total content of the inorganic particles is adjusted within the above-described range, and thus assembling easiness in the process of assembling the electrode may be improved. According to one embodiment of the present disclosure, the average diameter ($D_{50}$) of the inorganic particles 135 is not particularly limited, but is preferably in a range of 0.3 μm or more and 1 μm or less in order to form a coating layer 130 having a uniform thickness and an appropriate porosity. The inorganic particles 135 may have an average diameter ($D_{50}$) of 0.2 μm or more, 0.3 μm or more, 0.4 μm or more, or 0.5 μm or more. The inorganic particles 135 may have an average diameter ($D_{50}$) of 0.9 μm or less, 0.8 μm or less, 0.7 μm or less, or 0.6 μm or less. Specifically, the inorganic particles 135 may have an average diameter ($D_{50}$) of 0.2 μm or more and 0.9 μm or less, 0.3 μm or more and 0.8 μm or less, 0.4 μm or more and 0.7 μm or less, or 0.5 μm or more and 0.6 μm or less such as about 0.5 μm. Specifically, when the average diameter is less than 0.3 μm, the dispersibility of the inorganic particles in the slurry prepared to prepare the coating layer may decrease, and when the average diameter exceeds 1 μm, the thickness of a coating layer to be formed may increase.

In this specification, "$D_{50}$ particle diameter" means a particle diameter at the 50% point of the cumulative distribution of the number of particles according to the particle diameter. The particle diameter may be measured using a laser diffraction method. Specifically, after dispersing a powder to be measured in a dispersion medium, it is introduced into a commercially available laser diffraction particle size measuring device (e.g., Microtrac S3500) to measure the difference in diffraction pattern according to the particle size when the particles pass through the laser beam, thereby calculating a particle diameter distribution. The $D_{50}$ particle diameter may be measured by calculating the particle diameter at the point where the particle diameter distribution becomes 50% of the cumulative distribution of the number of particles according to the particle diameter in the measuring device.

According to one embodiment of the present disclosure, the coating layer 130 may have a porosity of 30% by volume or more. The coating layer 130 may have a porosity of 30% by volume or more, 32% by volume or more, 33% by volume or more, 34% by volume or more, 36% by volume or more, 38% by volume or more, 40% by volume or more, 42% by volume or more, 44% by volume or more, 46% by volume or more, or 48% by volume or more. The coating layer 130 may have a porosity of 70% by volume or less, 68% by volume or less, 66% by volume or less, 64% by volume or less, 62% by volume or less, 60% by volume or less, 58% by volume or less, 56% by volume or less, 54% by volume or less, or 52% by volume or less. Specifically, the coating layer 130 may have a porosity of 30% by volume or more and 70% by volume or less, 32% by volume or more and 68% by volume or less, 34% by volume or more and 66% by volume or less, 36% by volume or more and 64% by volume or less, 38% by volume or more and 62% by volume or less, 40% by volume or more and 60% by volume or less, 42% by volume or more and 58% by volume or less, 44% by volume or more and 56% by volume or less, 46% by volume or more and 54% by volume or less, or 48% by volume or more and 52% by volume or less. The porosity of the coating layer 130 is adjusted within the above-described range so that the movement of ions in the separator may be maintained, and an increase in resistance of the separator may be prevented. Specifically, if the porosity is 70% by volume or less, dynamic properties that can withstand the press process of bonding it with the electrode may be secured, and it is also suitable for securing adhesive force since the surface opening ratio does not become too high. Meanwhile, when the porosity is 30% by volume or more, it is advantageous in terms of ion permeability.

In this specification, "porosity" means a ratio of the volume occupied by pores to the total volume, uses % by volume as its unit, and may be used interchangeably with terms such as pore ratio and porosity.

In this specification, the porosity may correspond to a value obtained by subtracting the volume converted into the weight and density of each component of the porous polymer substrate 110 and/or the coating layer 130 from the volume calculated in the thickness, width, and length of the porous polymer substrate 110 and/or the coating layer 130.

In this specification, the porosity and pore size of the porous polymer substrate 110 and/or the coating layer 130 may be measured by the BET 6-point method by the nitrogen gas adsorption flow method using a scanning electron microscope (SEM) image, a mercury porosimeter, or a capillary flow porometer, or a porosimetry analyzer (Bell Japan Inc, Belsorp-II mini). At this time, it may be advantageous to use the capillary flow porometer.

According to one embodiment of the present disclosure, the polyvinylidene-based binder having a content of hexafluoropropylene of less than 10% by weight may be an aqueous binder. Specifically, the polyvinylidene-based binder having a content of hexafluoropropylene of less than 10% by weight, which is an aqueous binder, is selected, and thus an increase in resistance of the separator may be prevented. In this specification, "aqueous binder" is a binder that is soluble in water and may mean one having a solubility index similar to that of water.

According to one embodiment of the present disclosure, the coating layer may have a dry adhesive force of 30 gf/25 mm or more. The coating layer may have a dry adhesive force of 35 gf/25 mm or more, 40 gf/25 mm or more, 45 gf/25 mm or more, 50 gf/25 mm or more, 55 gf/25 mm or more, or 60 gf/25 mm or more. The coating layer may have a dry adhesive force of 100 gf/25 mm or less, 95 gf/25 mm or less, 90 gf/25 mm or less, 85 gf/25 mm or less, 80 gf/25 mm or less,

75 gf/25 mm or less, or 70 gf/25 mm or less. Specifically, the coating layer may have a dry adhesive force of 30 gf/25 mm or more and 100 gf/25 mm or less, 35 gf/25 mm or more and 95 gf/25 mm or less, 40 gf/25 mm or more and 90 gf/25 mm or less, 45 gf/25 mm or more and 85 gf/25 mm or less, 50 gf/25 mm or more and 80 gf/25 mm or less, 55 gf/25 mm or more and 75 gf/25 mm or less, or 60 gf/25 mm or more and 70 gf/25 mm or less. As described above, the dry adhesive force of the coating layer is adjusted, and thus the assembling easiness in the process of assembling the electrode may be improved.

In this specification, the dry adhesive force of the coating layer may mean one obtained by measuring the strength at which the separator portion of the specimen is peeled at an angle of 180° at a rate of 150 mm/min at 25°C after cutting the separator into 70 mm (length) × 20 mm (width) and laminating the prepared electrode and separator using a press at conditions of 60°C, 6.5 MPa, and 1 sec to fabricate a specimen, attaching and fixing the prepared specimen to a glass plate using a double-sided tape, and disposing the specimen so that the electrode faces the glass plate at this time.

According to the embodiment of the present disclosure, an adhesive polymer binder may be provided on the coating layer (130). Specifically, the adhesive polymer binder may be disposed on an opposite surface of the coating layer which is opposite to a surface adjacent to the porous polymer substrate. More specifically, the opposite surface of the coating layer is covered by the adhesive polymer binder. As described above, by providing the adhesive polymer binder on the coating layer (130), dry adhesive force and wet adhesive force to an electrode are improved respectively.

According to the embodiment of the present disclosure, the adhesive polymer binder may be particle-type, solution-type and the combination thereof. In the present specification, "particle-type" may define that the adhesive polymer binder keeps the particle phase by not being dissolved with an electrolyte inserted in a cell. In the present specification, " solution-type" may define that the adhesive polymer binder does not keep the particle phase by being dissolved with an electrolyte inserted in a cell. By select the sort of the adhesive polymer binder in the described above, dry adhesive force and wet adhesive force to an electrode are improved respectively.

According to the embodiment of the present disclosure, the adhesive polymer binder is provided on part of the coating layer (130). As described above, by providing the adhesive polymer binder on part of the coating layer, dry adhesive force and wet adhesive force to an electrode are improved respectively.

According to the embodiment of the present disclosure, the adhesive polymer binder is provided to more than 0 % or less than 100 % of area based on the total area of the coating layer. Specifically, the adhesive polymer binder is provided to 1 % and more or 99 % and less, 5 % and more or 95 % and less, 10 % and more or 90 % and less, 15 % and more or 85 % and less, 20 % and more or 80 % and less, 25 % and more or 75 % and less, 30 % and more or 70 % and less, 35 % and more or 65 % and less, 40 % and more or 60 % and less, or 45 % and more or 55 % and less of area based on the total area of the coating layer. The area provided by the adhesive polymer binder on the coating layer is adjusted within the above-described range, dry adhesive force and wet adhesive force to an electrode are improved respectively.

According to the embodiment of the present disclosure, the adhesive polymer binder may be same with the first polymer binder and the second polymer binder, or be different from the first polymer binder and the second polymer binder. The sort of the adhesive polymer binder is selected as the above-described, the adhesive force between the coating layer and the adhesive polymer binder may be adjusted, dissolution of the adhesive polymer binder by an electrolyte may be prevented, and resistance of a cell may be minimized.

According to the embodiment of the present disclosure, the adhesive polymer binder may be provided on part of the coating layer by spray method, bar coating method, spin coating method or deep coating method. The provided method of the adhesive polymer binder is selected as the above-described, the adhesive polymer binder is disposed on the coating layer easily.

One embodiment of the present disclosure provides a method for manufacturing a separator for an electrochemical device, including the steps of: mixing a slurry for a coating layer 130, that is, a slurry for preparing the coating layer 130, containing a first polymer binder in the form of particles 131, a second polymer binder in the form of particles 133, and inorganic particles 135 (S10); applying the slurry for a coating layer to at least one surface of a porous polymer substrate 110 (S30); and drying the slurry for a coating layer to form a coating layer 130 (S50), wherein the second polymer binder is selected from the group consisting of a polyvinylidene-based binder having a content of hexafluoropropylene of less than 10% by weight, a polyolefin-based binder, and a combination thereof.

The method for manufacturing a separator for an electrochemical device according to one embodiment of the present disclosure may easily prevent an increase in the resistance of the separator, and may allow the polymer binder particles to support the pressure applied in the process of lamination with the electrode to prevent a decrease in the porosity of the separator.

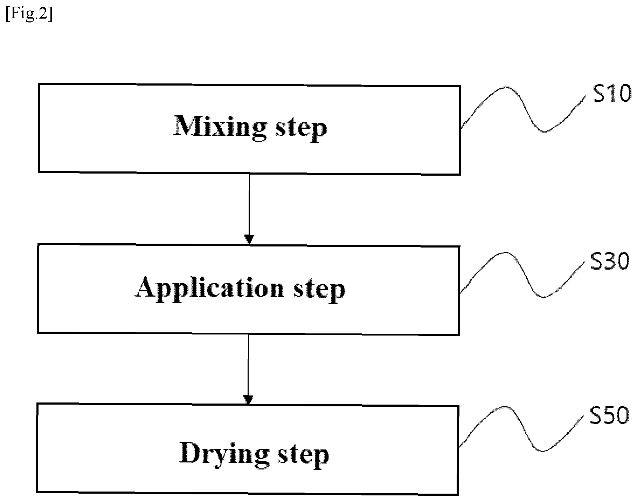

FIG. 2 is a flowchart of a method for manufacturing a separator 100 for an electrochemical device according to one embodiment of the present disclosure. Referring to FIG. 2, the method for manufacturing a separator 100 for an electrochemical device, which is one embodiment of the present disclosure, will be described in detail. In the description of the method for manufacturing the separator 100 for an electrochemical device according to one embodiment of the present disclosure, the contents overlapping with the description of the separator for an electrochemical device will be omitted.

According to one embodiment of the present disclosure, the method for manufacturing the separator 100 for an electrochemical device includes a step of mixing a slurry for a coating layer containing first polymer binder particles 131,

that is, the first polymer binder in the form of particles, second polymer binder particles 133, that is, the second polymer binder in the form of particles, and inorganic particles 135 (S10). As described above, the method includes the step (S10) of mixing a slurry for a coating layer containing first polymer binder particles 131, second polymer binder particles 133, and inorganic particles 135, and thus the coating layer may be easily formed on the separator.

According to one embodiment of the present disclosure, a polymer binder resin, that is, the first polymer binder particles 131 and the second polymer binder particles 133 may be dispersed in an appropriate dispersion medium to prepare a polymer emulsion, thereby forming a slurry for a coating layer. As the dispersion medium, one having a solubility index similar to that of a binder polymer to be used and having a low boiling point is preferable. This is to facilitate uniform mixing and subsequent removal of the dispersion medium. Nonlimiting examples of a usable dispersion media include acetone, tetrahydrofuran, methylene chloride, chloroform, dimethylformamide, N-methyl-2-pyrrolidone (NMP), cyclohexane, water, or mixtures thereof. Preferably, the solvent may be water. **In** this specification, the dispersion medium is one used in the process of preparing the slurry, and may mean a solvent.

According to one embodiment of the present disclosure, inorganic particles 135 may be added to and dispersed in the polymer emulsion. The content ratio of the inorganic particles and the polymer binder particles is as described above, and is appropriately adjusted in consideration of the thickness, pore size, and porosity of the coating layer according to one embodiment of the present disclosure finally manufactured.

According to one embodiment of the present disclosure, a slurry for a coating layer may be prepared by dispersing the first polymer binder particles 131, the second polymer binder particles 133, and the inorganic particles 135 in water which is a dispersion medium (solvent).

The slurry for a coating layer may comprise, essentially comprise or consist of the first polymer binder particles 131, the second polymer binder particles 133, the inorganic particles and a dispersion medium.

Mixing of the slurry may be or include performing mixing for 1 hour or more and 3 hours or less.

According to one embodiment of the present disclosure, the solid content of the slurry for the coating layer may be 10% by weight or more and 50% by weight or less, based on 100 % by weight of the slurry. The solid content of the slurry for the coating layer may be 15% by weight or more, 20% by weight or more, or 25% by weight or more. The solid content of the slurry for the coating layer may be 40% by weight or less, 35% by weight or less, or 30% by weight or less. Specifically, the solid content of the slurry for the coating layer may be 15% by weight or more and 40% by weight or less, 20% by weight or more and 35% by weight or less, or 25% by weight or more and 30% by weight or less. The solid content of the slurry for the coating layer is adjusted within the above-described range, and thus the workability of the coating layer manufacturing process may be improved.

According to one embodiment of the present disclosure, the method for manufacturing the separator 100 for an electrochemical device includes a step of applying the slurry for the coating layer to at least one surface of the porous polymer substrate 110 (S30). As described above, the step of applying the slurry for the coating layer to at least one surface of the porous polymer substrate 110 is included, and thus the coating layer 130 may be formed with one time application. Due to the separation between the inorganic particles and the polymer binder particles, the slurry for the coating layer has an excessive amount of inorganic particles 135 in the portion close to the porous polymer substrate 110, and has an excessive amount of the polymer binder particles 131 and 133 in the portion far from the porous polymer substrate 110, which opposites the porous polymer substrate 110, so that adhesive force to the electrode may be improved, and porosity of the separator may be improved. In this specification, the presence of the excessive amount may mean the content exceeding 50% by weight in the corresponding portion, and the portion close to the porous polymer substrate 110 and the portion far from the porous polymer substrate 110 may be divided based on an imaginary line occupying 1/2 the thickness of the coating layer.

According to one embodiment of the present disclosure, the method of applying the slurry for the coating layer to the surface of the porous polymer substrate 110 is not particularly limited to any one method, and a conventional method known in the art may be used. For example, various methods such as dip coating, die coating, roll coating, comma coating, or a combination thereof may be used.

According to one embodiment of the present disclosure, the method for manufacturing the separator 100 for an electrochemical device includes a step (S50) of forming a coating layer 130 by drying the slurry for the coating layer. As described above, the step (S50) of forming a coating layer 130 by drying the slurry for the coating layer is included, and thus damage to the coating layer may be minimized, and the solvent contained in the slurry may be easily removed.

According to one embodiment of the present disclosure, in the drying process, time conditions are appropriately set to minimize occurrence of surface defects of the coating layer 130. For the drying, a drying auxiliary device such as a drying oven or hot air may be used within an appropriate range.

According to one embodiment of the present disclosure, the step of performing drying may have a temperature of 25°C or more and 75°C or less. The step of performing drying may have a temperature of 30°C or more, 35°C or more, 40°C or more, or 45°C or more. The step of performing drying may have a temperature of 70°C or less, 65°C or less, 60°C or less, or 55°C or less. Specifically, the step of performing drying may have a temperature of 30°C or more and 70°C or less, 35°C or more and 65°C or less, 40°C or more and 60°C or less, or 45°C or more and 55°C or less. The temperature of the step of

performing drying is adjusted within the above-described range, and thus denaturation of the porous polymer substrate may be prevented, and the dispersion medium may be effectively removed.

According to one embodiment of the present disclosure, the second polymer binder particles 133 are one selected from a polyvinylidene-based binder having a content of hexafluoropropylene of less than 10% by weight, a polyolefin-based binder, and a combination thereof. As described above, the second polymer binder particles 133 that are one selected from a polyvinylidene-based binder having a content of hexafluoropropylene of less than 10% by weight, a polyolefin-based binder, and a combination thereof are selected, and thus the porosity of the separator may be maintained. Specifically, referring to FIG. 1, the acrylic binder particles are changed into a film form in the process of performing lamination with the electrode to reduce the porosity of the coating layer and interfere with the movement of ions through the pores so that there is a problem of increasing resistance. However, a polyvinylidene-based binder containing a low content of hexafluoropropylene or/and a polyolefin-based binder is selected as described above for the second polymer binder particles 133, and thus the second polymer binder particles 133 may support the pressure applied in the process of performing lamination in the process of lamination with the electrode to maintain the porosity, and through this, allow ions to move through the separator to prevent an increase in resistance.

According to one embodiment of the present disclosure, the step of performing mixing may be performing mixing for 1 hour or more and 3 hours or less. The step of performing mixing may be performing mixing for 1.5 hours or more. The step of performing mixing may be performing mixing for 2.5 hours or less. Preferably, the step of performing mixing may be performing mixing for 1.5 hours or more and 2.5 hours or less or for about 2 hours. As described above, the time during which the slurry is mixed is adjusted, and thus the dispersibility of the inorganic particles 135 contained in the slurry for a coating layer may be improved, and the uniformity in the slurry for a coating layer of the first polymer binder particles 131, the second polymer binder particles 133, and the inorganic particles 135 may be improved.

According to one embodiment of the present disclosure, the first polymer binder particles 131 used in the method may be one selected from the group consisting of: acrylic binder particles; polyvinylidene-based binder particles; hybrid binder particles containing an acrylic binder and a polyvinylidene-based binder; and combinations thereof. As described above, the first polymer binder particles 131 that are acrylic binder particles are selected, and thus the acrylic binder may be formed into a film in the process of lamination with an electrode, thereby improving the adhesive force with the electrode.

According to one embodiment of the present disclosure, the temperature in the step of performing drying (S50) and the glass transition temperature of the first polymer binder particles may have a difference of 20°C or less. The temperature in the step of performing drying and the glass transition temperature of the first polymer binder particles may have a difference of more than 0°C, 1°C or more, 2°C or more, 3°C or more, 4°C or more, 5°C or more, 6°C or more, 7°C or more, 8°C or more, or 9°C or more. The temperature in the step of performing drying and the glass transition temperature of the first polymer binder particles may have a difference of 20°C or less, 19°C or less, 18°C or less, 17°C or less, 16°C or less, 15°C or less, 14°C or less, 13°C or less, 12°C or less, or 11°C or less. Specifically, the temperature in the step of performing drying and the glass transition temperature of the first polymer binder particles may have a difference of more than 0°C and 20°C or less, 1°C or more and 19°C or less, 2°C or more and 18°C or less, 3°C or more and 17°C or less, 4°C or more and 16°C or less, 5°C or more and 15°C or less, 6°C or more and 14°C or less, 7°C or more and 13°C or less, 8°C or more and 12°C or less, or 9°C or more and 11°C or less. The difference between the temperature in the step of performing drying and the glass transition temperature of the first polymer binder particles is adjusted within the above-described range, and thus it may be possible to prevent the first polymer binder particles from being melted and disposed on a portion adjacent to the porous polymer substrate.

According to one embodiment of the present disclosure, the separator 100 is manufactured into an electrochemical device by a lamination process in which the separator 100 is interposed between an anode and a cathode and bound by applying heat and/or pressure. **In** one embodiment of the present disclosure, the lamination process may be performed by a roll press device including a pair of pressure rollers. That is, interlayer binding may be achieved by sequentially stacking an anode, a separator, and a cathode, and inputting them between the pressure rollers. At this time, the lamination process may be performed by a method of hot pressing.

One embodiment of the present disclosure provides an electrochemical device 1000 including: a cathode 300; an anode 500; and the separator 100 interposed between the cathode 300 and the anode 500.

The electrochemical device 1000 according to one embodiment of the present disclosure may improve energy efficiency by reducing resistance of the separator.

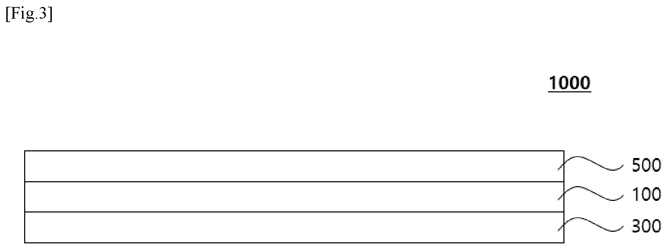

FIG. 3 is a schematic view of an electrochemical device 1000 according to one embodiment of the present disclosure. Referring to FIG. 3, the electrochemical device 1000 according to one embodiment of the present disclosure will be described in detail.

In one embodiment of the present disclosure, the electrochemical device is a device that converts chemical energy into electrical energy by an electrochemical reaction, and is a concept encompassing a primary battery and a secondary battery. In this specification, the secondary battery is capable of charging and discharging, and means a lithium secondary battery, a nickel-cadmium battery, a nickel-hydrogen battery, or the like. The lithium secondary battery is one which uses lithium ions as an ion conductor, and examples thereof may include a non-aqueous electrolyte secondary

battery including a liquid electrolyte, an all-solid-state battery including a solid electrolyte, a lithium polymer battery including a gel polymer electrolyte, a lithium metal battery in which a lithium metal is used as an anode, and the like, but are not limited thereto.

According to one embodiment of the present disclosure, the cathode includes a cathode current collector and a cathode active material layer containing a cathode active material, a conductive material, and a binder resin on at least one surface of the current collector. The cathode active material may include: layered compounds such as lithium manganese oxide composites ($LiMn_2O_4$, $LiMnO_2$, etc.), lithium cobalt oxide ($LiCoO_2$), and lithium nickel oxide ($LiNiO_2$), or compounds substituted with one or more transition metals; lithium manganese oxides such as the formula $Li_{1+x}Mn_{2-x}O_4$ (where x is 0 to 0.33), $LiMnO_3$, $LiMn_2O_3$, and $LiMnO_2$; lithium copper oxide ($Li_2CuO_2$); vanadium oxides such as $LiV_3O_8$, $LiV_3O_4$, $V_2O_5$, and $Cu_2V_2O_7$; Ni site type lithium nickel oxides represented by the formula $LiNi_{1-x}MxO_2$, where M = Co, Mn, Al, Cu, Fe, Mg, B, or Ga, and x = 0.01 to 0.3; lithium manganese oxide composites represented by the formula $LiMn_{1-x}M_xO_2$ (where M = Co, Ni, Fe, Cr, Zn, or Ta, and x = 0.01 to 0.1) or $Li_2Mn_3MO_8$ (where M = Fe, Co, Ni, Cu, or Zn); $LiMn_2O_4$ in which a part of Li of the formula is substituted with an alkaline earth metal ions; disulfide compounds; $Fe_2(MoO_4)_3$; or mixtures of two or more thereof.

According to one embodiment of the present disclosure, the anode includes an anode current collector and an anode active material layer containing an anode active material, a conductive material, and a binder resin on at least one surface of the current collector. The anode may include, as the anode active material, one selected from: carbon such as lithium metal oxide, non-graphitizable carbon, and graphite-based carbon; metal oxide composites such as $LixFe_2O_3$ ($0 \leq x \leq 1$), $Li_xWO_2$ ($0 \leq x \leq 1$), and $Sn_xMe_{1-x}Me'_yO_z$ (Me: Mn, Fe, Pb, Ge; Me': Al, B, P, Si, Group 1, Group 2 and Group 3 elements of the periodic table, halogens; $0<x \leq 1$; $1 \leq y \leq 3$; $1 \leq z \leq 8$); lithium metal; lithium alloys; silicon-based alloys; tin-based alloys; metal oxides such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, and $Bi_2O_5$; conductive polymers such as polyacetylene; Li-Co-Ni based materials; and titanium oxides; or mixtures of two or more thereof.

According to one embodiment of the present disclosure, the conductive material may be, for example, any one selected from the group consisting of graphite, carbon black, carbon fiber or metal fiber, metal powder, conductive whisker, conductive metal oxide, activated carbon, and polyphenylene derivatives, or mixtures of two or more conductive materials thereof. More specifically, it may be one selected from the group consisting of natural graphite, artificial graphite, super-p, acetylene black, ketjen black, channel black, furnace black, lamp black, thermal black, denka black, aluminum powder, nickel powder, zinc oxide, potassium titanate, and titanium oxide, or mixtures of two or more conductive materials thereof.

According to one embodiment of the present disclosure, the current collector is not particularly limited as long as it does not cause chemical change in the concerned battery and has high conductivity. For example, stainless steel, copper, aluminum, nickel, titanium, calcined carbon, or aluminum or stainless steel, which is surface-treated with carbon, nickel, titanium, silver, or the like on the surface thereof, may be used.

According to one embodiment of the present disclosure, a polymer commonly used in electrodes in the art may be used as the binder resin. Nonlimiting examples of such a binder resin may include poly(vinylidene fluoride-co-hexafluoropropylene), polyvinylidene fluoride-co-trichloroethylene, polymethyl methacrylate, polyethylhexyl acrylate, polybutylacrylate, polyacrylonitrile, polyvinylpyrrolidone, polyvinylacetate, ethylene vinyl acetate copolymer (polyethylene-co-vinyl acetate), polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, and the like, but are not limited thereto.

According to one embodiment of the present disclosure, the cathode slurry for preparing the cathode active material layer may contain a dispersant, and the dispersant may be a pyrrolidone-based compound. Specifically, it may be N-methylpyrrolidone (ADC-01, LG Chem).

According to one embodiment of the present disclosure, the dispersant may be contained in the cathode slurry in an amount of more than 0 part by weight and 0.5 parts by weight or less based on 100 parts by weight of the cathode slurry. Specifically, the dispersant may be contained in the cathode slurry in an amount of more than 0.05 parts by weight and 0.4 parts by weight or less based on 100 parts by weight of the cathode slurry.

According to one embodiment of the present disclosure, the anode slurry for preparing the anode active material layer may contain a dispersant, and the dispersant may be a polypyrrolidone-based compound. Specifically, the dispersant may be polyvinylpyrrolidone (Junsei, Japan).

According to one embodiment of the present disclosure, the dispersant may be contained in the anode slurry in an amount of more than 0 part by weight and 0.5 parts by weight or less based on 100 parts by weight of the anode slurry. Specifically, the dispersant may be contained in the anode slurry in an amount of more than 0.05 parts by weight and 0.4 parts by weight or less based on 100 parts by weight of the anode slurry.

According to one embodiment of the present disclosure, a battery may be manufactured by loading the electrochemical device prepared as described above into an appropriate case and injecting an electrolyte.

According to one embodiment of the present disclosure, the electrolyte is a salt having a structure of $A^+B^-$, wherein salts in which $A^+$ includes ions consisting of alkali metal cations such as $Li^+$, $Na^+$, and $K^+$, or combinations thereof,

and $B^-$ includes ions consisting of anions such as $PF_6^-$, $BF_4^-$, $Cl^-$, $Br^-$, $I^-$, $ClO_4^-$, $AsF_6^-$, $CH_3CO_2^-$, $CF_3SO_3^-$, $N(CF_3SO_2)_2^-$, and $C(CF_2SO_2)_3^-$, or combinations thereof may include those dissolved or dissociated in organic solvents composed of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma butyrolactone (γ-butyrolactone), or mixtures thereof, but are not limited thereto.

One embodiment of the present disclosure provides a battery module including a battery including the electrochemical device as a unit cell, a battery pack including the battery module, and a device including the battery pack as a power source. Specific examples of the device may include: a power tool moved by an electric motor by receiving power; electric cars including electric vehicles (EVs), hybrid electric vehicles (HEVs), plug-in hybrid electric vehicles (PHEVs), and the like; electric two-wheeled vehicles including electric bicycles (E-bikes) and electric scooters (E-scooters); electric golf carts; a power storage system; and the like, but are not limited thereto.

Hereinafter, Examples will be described in detail to explain the present disclosure in detail. However, embodiments according to the present disclosure can be modified in various different forms, and the scope of the present disclosure is not construed as being limited to Examples described below. The embodiments of this specification are provided to more completely explain the present disclosure to those skilled in the art.

**<Example 1>**

A polyethylene resin (weight average molecular weight of 900,000) was extruded, and a porous polymer substrate (total thickness of about 9 μm, porosity of 40% by volume) was manufactured by a wet method.

A copolymer of styrene and butyl acrylate (styrene-butyl acrylate, glass transition temperature of 40°C), which is an acrylic binder having a particle diameter of 500 nm as the first polymer binder particles, and a mixture obtained by mixing polyethylene having a particle diameter of 500 nm with a copolymer of PVdF and HFP having a degree of substitution (weight ratio of HFP contained in a PVdF-based polymer) of 5% by weight, which is a polyvinylidene-based binder having a particle diameter of 500 nm as second polymer binder particles, at a weight ratio of 1:1, were used, and the first polymer binder particles, the second polymer binder particles, and inorganic particles ($Al_2O_3$, particle diameter of 500 nm) were inputted into water, and mixed and dispersed for 2 hours to prepare a slurry (solid content of 30%) for a coating layer. The first polymer binder particles and the second polymer binder particles had a weight ratio of 1:1, and the polymer binder particles and the inorganic particles had a weight ratio of 25:75.

The dispersion was applied to both surfaces of the porous polymer substrate by a method of bar coating using a doctor blade and dried with wind of 50°C using a heat gun.

**<Example 2>**

A separator was manufactured in the same manner as in Example 1 above except that only a PVDF-based binder containing 9% by weight of HFP was used as the second polymer binder particles in Example 1 above.

**<Example 3>**

A separator was manufactured in the same manner as in Example 1 above except that only polyethylene was used as the second polymer binder particles in Example 1 above.

<Example 4>

To manufacture a separator, on the coating layer of the separator manufactured in Example 1, styrene-butyl acrylate(glass transition temperature of 40°C, particle diameter of 500 nm), which is an acrylic binder, as the adhesive polymer binder, was coated by spray method in order that the adhesive polymer binder is provided to 50 % of area based the total area of the coating layer and the separator was manufactured.

**<Comparative Example 1>**

A separator was manufactured in the same manner as in Example 1 above except that the second polymer binder particles were not contained in Example 1 above.

**<Comparative Example 2>**

A separator was manufactured in the same manner as in Example 1 above except that a polymer of 2-ethylhexyl

acrylate (2-EHA), which is an acrylic binder, was used as the second polymer binder particles in Example 1 above.

**<Manufacture of Electrochemical Devices>**

1) Manufacture of cathode

A cathode active material ($LiNi_{0.8}Mn_{0.1}Co_{0.1}O_2$), a conductive material (carbon black), a dispersant (N-methylpyrrolidone, ADC-01, LG Chem), and a binder resin (a mixture of PVDF-HFP and PVDF) were mixed with water at a weight ratio of 97.5:0.7:0.14:1.66 to prepare a slurry for a cathode active material layer having a concentration of 50% by weight of the remaining components except for water. Next, the slurry was applied to the surface of an aluminum thin film (thickness of 10 μm) and dried to prepare a cathode having a cathode active material layer (thickness of 120 μm).

2) Manufacture of anode

Graphite (a blend of natural graphite and artificial graphite), a conductive material (carbon black), a dispersant (polyvinylpyrrolidone, Junsei, Japan), and a binder resin (a mixture of PVDF-HFP and PVDF) were mixed with water at a weight ratio of 97.5:0.7:0.14:1.66 to prepare a slurry for an anode active material layer having a concentration of 50% by weight of the remaining components except for water. Next, the slurry was applied to the surface of a copper thin film (thickness of 10 μm) and dried to prepare an anode having an anode active material layer (thickness of 120 μm).

3) Lamination process

An electrode assembly was obtained by interposing the separators of Examples and Comparative Examples between the prepared anode and cathode, stacking them, and performing a lamination process. The lamination process was performed at conditions of 70°C and 5.2 MPa for 10 seconds by using a hot press.

**<Experimental Example 1: Measurement of Porosity of Coating Layer>**

The porosity was calculated through [Equation 1] and [Equation 2] below.

[Equation 1]

$$\text{Porosity (\% by volume)} = \{1-(\text{apparent density}/\text{true density})\} \times 100$$

$$\text{Apparent density (g/cm}^3) = \{\text{weight of coating layer [g]}/\text{thickness of coating layer [cm]} \times \text{area of coating layer [cm}^2])\} \quad \text{[Equation 2]}$$

Three samples having a size of 5 cm in the MD/TD direction were obtained from the coating layers of each Example and Comparative Example. For the thickness of the coating layer, an average value was used after measuring 5 points for each sample, and the weight of each sample was measured using a scale. The average value of the three samples was calculated and introduced into Equations 1 and 2 above to calculate the porosity. Meanwhile, the true density in each sample was applied based on theoretically confirmed numerical values such as molecular weight for each applied component. In this regard, the true density defines that the value is calculated by volume and mass. The volume is measured on the condition that the coating layer does not include closed pores.

**<Experimental Example 2: Measurement of Separator Resistance>**

Each separator substrate was interposed between stainless steels, an electrolyte was injected to fabricate a coin cell, and electrical resistance (ER) was measured by the electrochemical impedance spectroscopy (EIS) method. At this time, the frequency was in a range of 10,000 to 100,000 Hz. The electrolyte is obtained by mixing $LiPF_6$ at a concentration of 1 M in a non-aqueous solvent in which ethylene carbonate (EC) and ethyl methyl carbonate (EMC) were mixed at a ratio of 3:7.

[Table 1]

| | Porosity of coating layer (% by volume) | Resistance of separator (Ω) |
|---|---|---|
| Example 1 | 38% | 0.65 |

(continued)

| | Porosity of coating layer (% by volume) | Resistance of separator (Ω) |
|---|---|---|
| Example 2 | 35% | 0.73 |
| Example 3 | 36% | 0.71 |
| Example 4 | 38% | 0.67 |
| Comparative Example 1 | 33% | 0.79 |
| Comparative Example 2 | 30% | 0.85 |

Referring to Table 1, it was confirmed that the resistances of the separators were implemented at 0.73 Ω or less, and the porosities of the coating layers were implemented at 35% by volume or more in all of Examples 1 to 3 including a polyvinylidene-based binder containing a low content of hexafluoropropylene, or a polyolefin-based binder.

In contrast, it was confirmed that the porosity decreased and the resistance of the separator increased in Comparative Example 1 that does not include the second polymer binder particles. Furthermore, it was confirmed that the porosity decreased and the resistance of the separator increased also in Comparative Example 2 using only the acrylic binder as the second polymer binder particles.

After all, according to one embodiment of the present disclosure, the resistance of the separator can be prevented from increasing or may be reduced and the porosity of the coating layer can be improved by including a polyvinylidene-based binder containing a low content of hexafluoropropylene or a polyolefin-based binder in the coating layer.

[Detailed Description of Main Elements]

100: Separator for electrochemical device
110: Porous polymer substrate
130: Coating layer
131: First polymer binder particles
133: Second polymer binder particles
135: Inorganic particles
300: Cathode
500: Anode
1000: Electrochemical device

## Claims

**1.** A separator (100) for an electrochemical device, comprising:

a porous polymer substrate (110); and
a coating layer (130) provided on at least one surface of the porous polymer substrate (110);
wherein the coating layer (130) comprises a first polymer binder in the form of particles (131), a second polymer binder in the form of particles (133), and inorganic particles (135); and
the second polymer binder is selected from the group consisting of a polyvinylidene-based binder having a content of hexafluoropropylene (HFP) of less than 10% by weight, with respect to the total weight of the polyvinylidene-based binder, a polyolefin-based binder, and a combination thereof;
wherein

- the amount of the inorganic particles (135) in a region of the coating layer (130) adjacent to the porous polymer substrate (110) is larger than the amount of the inorganic particles (135) in a region of the coating layer (130) opposed to the porous polymer substrate (110);
- the amount of the first polymer binder and the second polymer binder in a region of the coating layer (130) adjacent to the porous polymer substrate (110) is smaller than the amount of the first polymer binder and the second polymer binder in a region of the coating layer (130) opposed to the porous polymer substrate (110);

wherein the region of the coating layer (130) adjacent to the porous polymer substrate (110) is the half of the coating layer (130) adjacent to the porous polymer substrate (110); and the region of the coating layer (130) opposed to the porous polymer substrate (110) is the half of the coating layer (130) further away from the porous polymer substrate (110); if the coating layer (130) is divided into two halves with respect to the thickness of the coating layer (130);
the total content of the inorganic particles (135) in the coating layer (130) is 70 parts by weight or more based on 100 parts by weight of the coating layer (130);
the first polymer binder and the second polymer binder contained in the coating layer have a weight ratio from 4:6 to 6:4; and
the first polymer binder is an acrylic binder.

**2.** The separator (100) for an electrochemical device according to claim 1, wherein the coating layer (130) further comprises a region comprising the first polymer binder in the form of a film.

**3.** The separator (100) for an electrochemical device according to any of the preceding claims, wherein the polyvinylidene-based binder is a polyvinylidene fluoride-based binder.

**4.** The separator (100) for an electrochemical device according to any of the preceding claims, wherein the polyolefin-based binder is polyethylene.

**5.** The separator (100) for an electrochemical device according to any of the preceding claims, wherein the total content of the first polymer binder and the second polymer binder in the coating layer (130) is 30 parts by weight or less based on 100 parts by weight of the coating layer (130).

**6.** The separator (100) for an electrochemical device according to any of the preceding claims, wherein the coating layer (130) has a porosity of more than 33% by volume measured as set forth in the description.

**7.** The separator (100) for an electrochemical device according to any of the preceding claims, wherein the polyvinylidene-based binder having a content of hexafluoropropylene (HFP) of less than 10% by weight is an aqueous binder.

**8.** The separator (100) for an electrochemical device according to any of the preceding claims, wherein the coating layer (130) has a dry adhesive force of 30 gf/25 mm (11.768 N/m) or more, determined as described in the description.

**9.** An electrochemical device (1000) comprising: a cathode (300); an anode (500); and a separator (100), wherein

- the separator (100) is the separator (100) for an electrochemical device according to any one of claims 1 to 8; and
- the separator (100) is interposed between the cathode (300) and the anode (500).

**10.** A method for manufacturing a separator (100) for an electrochemical device according to any of the claims 1 to 8, the method comprising the steps:

mixing a slurry for preparing a coating layer (130), containing a first polymer binder in the form of particles (131), a second polymer binder in the form of particles (133), and inorganic particles (135);
applying the slurry for preparing a coating layer (130) to at least one surface of a porous polymer substrate (110); and
drying the slurry for preparing a coating layer (130) to form the coating layer (130),
wherein the second polymer binder is selected from a polyvinylidene-based binder having a content of hexafluoropropylene (HFP) of less than 10% by weight, with respect to the total weight of the polyvinylidene-based binder, a polyolefin-based binder, and a combination thereof;
the total content of the inorganic particles (135) in the coating layer (130) is 70 parts by weight or more based on 100 parts by weight of the coating layer (130);
the first polymer binder and the second polymer binder contained in the coating layer have a weight ratio from 4:6 to 6:4; and
the first binder is an acrylic binder.

**11.** The method according to claim 10, wherein the step of mixing is performing mixing for 1 hour or more and 3 hours or less.

**12.** The method according to claims 10 or 11, wherein the drying is drying at a temperature which differs from the glass transition temperature of the first polymer binder by not more than 20°C measured as set forth in the description.

## Patentansprüche

**1.** Separator (100) für eine elektrochemische Vorrichtung, umfassend:

ein poröses Polymersubstrat (110); und
eine Beschichtungsschicht (130), die auf mindestens einer Oberfläche des porösen Polymersubstrats (110) bereitgestellt ist;
wobei die Beschichtungsschicht (130) ein erstes Polymerbindemittel in der Form von Partikeln (131), ein zweites Polymerbindemittel in der Form von Partikeln (133) und anorganische Partikel (135) umfasst; und
das zweite Polymerbindemittel ausgewählt ist aus der Gruppe bestehend aus einem Bindemittel auf Polyvinylidenbasis mit einem Gehalt an Hexafluorpropylen (HFP) von weniger als 10 Gew.-%, bezogen auf das Gesamtgewicht des Bindemittels auf Polyvinylidenbasis, einem Bindemittel auf Polyolefinbasis und einer Kombination davon;
wobei

- die Menge der anorganischen Partikel (135) in einem Bereich der Beschichtungsschicht (130) angrenzend an das poröse Polymersubstrat (110) größer ist als die Menge der anorganischen Partikel (135) in einem Bereich der Beschichtungsschicht (130) gegenüber dem porösen Polymersubstrat (110);
- die Menge des ersten Polymerbindemittels und des zweiten Polymerbindemittels in einem Bereich der Beschichtungsschicht (130) angrenzend an das poröse Polymersubstrat (110) kleiner ist als die Menge des ersten Polymerbindemittels und des zweiten Polymerbindemittels in einem Bereich der Beschichtungsschicht (130) gegenüber dem porösen Polymersubstrat (110);

wobei der Bereich der Beschichtungsschicht (130) angrenzend an das poröse Polymersubstrat (110) die Hälfte der Beschichtungsschicht (130) angrenzend an das poröse Polymersubstrat (110) ist; und der Bereich der Beschichtungsschicht (130) gegenüber dem porösen Polymersubstrat (110) die Hälfte der Beschichtungsschicht (130) weiter entfernt von dem porösen Polymersubstrat (110) ist; wenn die Beschichtungsschicht (130) in zwei Hälften in Bezug auf die Dicke der Beschichtungsschicht (130) unterteilt ist;
der Gesamtgehalt der anorganischen Partikel (135) in der Beschichtungsschicht (130) 70 Gewichtsteile oder mehr, bezogen auf 100 Gewichtsteile der Beschichtungsschicht (130), beträgt;
das erste Polymerbindemittel und das zweite Polymerbindemittel, die in der Beschichtungsschicht enthalten sind, ein Gewichtsverhältnis von 4:6 bis 6:4 aufweisen; und
das erste Polymerbindemittel ein Acrylbindemittel ist.

**2.** Separator (100) für eine elektrochemische Vorrichtung nach Anspruch 1, wobei die Beschichtungsschicht (130) ferner einen Bereich umfasst, der das erste Polymerbindemittel in der Form eines Films umfasst.

**3.** Separator (100) für eine elektrochemische Vorrichtung nach einem der vorhergehenden Ansprüche, wobei das Bindemittel auf Polyvinylidenbasis ein Bindemittel auf Polyvinylidenfluoridbasis ist.

**4.** Separator (100) für eine elektrochemische Vorrichtung nach einem der vorhergehenden Ansprüche, wobei das Bindemittel auf Polyolefinbasis Polyethylen ist.

**5.** Separator (100) für eine elektrochemische Vorrichtung nach einem der vorhergehenden Ansprüche, wobei der Gesamtgehalt des ersten Polymerbindemittels und des zweiten Polymerbindemittels in der Beschichtungsschicht (130) 30 Gewichtsteile oder weniger, bezogen auf 100 Gewichtsteile der Beschichtungsschicht (130), beträgt.

**6.** Separator (100) für eine elektrochemische Vorrichtung nach einem der vorhergehenden Ansprüche, wobei die Beschichtungsschicht (130) eine Porosität von mehr als 33 Vol.-%, gemessen wie in der Beschreibung dargelegt, aufweist.

**7.** Separator (100) für eine elektrochemische Vorrichtung nach einem der vorhergehenden Ansprüche, wobei das Bindemittel auf Polyvinylidenbasis mit einem Gehalt an Hexafluorpropylen (HFP) von weniger als 10 Gew.-% ein wässriges Bindemittel ist.

8. Separator (100) für eine elektrochemische Vorrichtung nach einem der vorhergehenden Ansprüche, wobei die Beschichtungsschicht (130) eine Trockenhaftkraft von 30 gf/25 mm (11,768 N/m) oder mehr, bestimmt wie in der Beschreibung beschrieben, aufweist.

9. Elektrochemische Vorrichtung (1000), umfassend: eine Kathode (300); eine Anode (500); und einen Separator (100), wobei

- der Separator (100) der Separator (100) für eine elektrochemische Vorrichtung nach einem der Ansprüche 1 bis 8 ist; und
- der Separator (100) zwischen der Kathode (300) und der Anode (500) angeordnet ist.

10. Verfahren zum Herstellen eines Separators (100) für eine elektrochemische Vorrichtung nach einem der Ansprüche 1 bis 8, wobei das Verfahren die Schritte umfasst:

Mischen einer Aufschlämmung zum Herstellen einer Beschichtungsschicht (130), die ein erstes Polymerbindemittel in der Form von Partikeln (131), ein zweites Polymerbindemittel in der Form von Partikeln (133) und anorganische Partikel (135) enthält;
Aufbringen der Aufschlämmung zum Herstellen einer Beschichtungsschicht (130) auf mindestens eine Oberfläche eines porösen Polymersubstrats (110); und
Trocknen der Aufschlämmung zum Herstellen einer Beschichtungsschicht (130), um die Beschichtungsschicht (130) zu bilden,
wobei das zweite Polymerbindemittel ausgewählt ist aus einem Bindemittel auf Polyvinylidenbasis mit einem Gehalt an Hexafluorpropylen (HFP) von weniger als 10 Gew.-%, bezogen auf das Gesamtgewicht des Bindemittels auf Polyvinylidenbasis, einem Bindemittel auf Polyolefinbasis und einer Kombination davon;
der Gesamtgehalt der anorganischen Partikel (135) in der Beschichtungsschicht (130) 70 Gewichtsteile oder mehr, bezogen auf 100 Gewichtsteile der Beschichtungsschicht (130), beträgt;
das erste Polymerbindemittel und das zweite Polymerbindemittel, die in der Beschichtungsschicht enthalten sind, ein Gewichtsverhältnis von 4:6 bis 6:4 aufweisen; und
das erste Bindemittel ein Acrylbindemittel ist.

11. Verfahren nach Anspruch 10, wobei der Schritt des Mischens das Durchführen von Mischen für 1 Stunde oder mehr und 3 Stunden oder weniger ist.

12. Verfahren nach Anspruch 10 oder 11, wobei das Trocknen das Trocknen bei einer Temperatur ist, die sich von der Glasübergangstemperatur des ersten Polymerbindemittels um nicht mehr als 20 °C, gemessen wie in der Beschreibung dargelegt, unterscheidet.

## Revendications

1. Séparateur (100) pour un dispositif électrochimique, comprenant :

un substrat polymère poreux (110) ; et
une couche de revêtement (130) fournie sur une des surfaces du substrat polymère poreux (110) ;
dans lequel la couche de revêtement (130) comprend un premier polymère liant sous la forme de particules (131), un deuxième polymère liant sous la forme de particules (133) et des particules inorganiques (135) ; et
le deuxième polymère liant est sélectionné dans le groupe constitué d'un liant à base de polyvinylidène ayant une teneur de hexafluoropropylène (HFP) inférieure à 10 % en poids pour le poids total du liant à base de polyvinylidène, un liant à base de polyoléfine, et une combinaison de ces derniers ;
dans lequel

- la quantité de particules inorganiques (135) dans une région de la couche de revêtement (130) adjacente au substrat polymère poreux (110) est supérieure à la quantité de particules inorganiques (135) dans une région de la couche de revêtement (130) opposée au substrat polymère poreux (110) ;
- la quantité du premier polymère liant et du deuxième polymère liant dans une région de la couche de revêtement (130) adjacente au substrat polymère poreux (110) est inférieure à la quantité du premier polymère liant et du deuxième polymère liant dans une région de la couche de revêtement (130) opposée au substrat polymère poreux (110) ;

dans lequel la région de la couche de revêtement (130) adjacente au substrat polymère poreux (110) est la moitié de la couche de revêtement (130) adjacente au substrat polymère poreux (110) ; et la région de la couche de revêtement (130) opposée au substrat polymère poreux (110) est la moitié de la couche de revêtement (130) plus éloignée du substrat polymère poreux (110), si la couche de revêtement (130) est divisée en deux moitiés dans l'épaisseur de la couche de revêtement (130) ;
la teneur totale des particules inorganiques (135) dans la couche de revêtement (130) est 70 parties en poids ou plus sur la base de 100 parties en poids de la couche de revêtement (130) ;
le premier polymère liant et le deuxième polymère liant contenus dans la couche de revêtement ont un rapport en poids de 4:6 à 6:4 ; et
le premier polymère liant est un liant acrylique.

**2.** Séparateur (100) pour un dispositif électrochimique selon la revendication 1, dans lequel la couche de revêtement (130) comprend en outre une région comprenant le premier polymère liant sous la forme d'un film.

**3.** Séparateur (100) pour un dispositif électrochimique selon l'une quelconque des revendications précédentes, dans lequel le liant à base de polyvinylidène est un liant à base de fluorure de polyvinylidène.

**4.** Séparateur (100) pour un dispositif électrochimique selon l'une quelconque des revendications précédentes, dans lequel le liant à base de polyoléfine est un polyéthylène.

**5.** Séparateur (100) pour un dispositif électrochimique selon l'une quelconque des revendications précédentes, dans lequel la teneur totale du premier polymère liant et du deuxième polymère liant dans la couche de revêtement (130) est égale ou inférieure à 30 parties en poids sur la base de 100 parties en poids de la couche de revêtement (130).

**6.** Séparateur (100) pour un dispositif électrochimique selon l'une quelconque des revendications précédentes, dans lequel la couche de revêtement (130) a une porosité supérieure à 33 % en volume, mesurée comme indiqué dans la description.

**7.** Séparateur (100) pour un dispositif électrochimique selon l'une quelconque des revendications précédentes, dans lequel le liant à base de polyvinylidène ayant une teneur de hexafluoropropylène (HFP) inférieure à 10 % en poids est un liant aqueux.

**8.** Séparateur (100) pour un dispositif électrochimique selon l'une quelconque des revendications précédentes, dans lequel la couche de revêtement (130) a une force adhésive sèche égale ou supérieure à 30 gf/25 mm (11,768 N/m), déterminée comme décrit dans la description.

**9.** Dispositif électrochimique (1000) comprenant : une cathode (300) ; une anode (500) ; et un séparateur (100), dans lequel

- le séparateur (100) est le séparateur (100) pour un dispositif électrochimique selon l'une quelconque des revendications 1 à 8 ; et
- le séparateur (100) est interposé entre la cathode (300) et l'anode (500).

**10.** Procédé de fabrication d'un séparateur (100) pour un dispositif électrochimique selon l'une quelconque des revendications 1 à 8, le procédé comprenant les étapes consistant à :

mélanger une suspension pour préparer une couche de revêtement (130), contenant un premier polymère liant sous la forme de particules (131), un deuxième polymère liant sous la forme de particules (133) et des particules inorganiques (135) ;
appliquer la suspension pour préparer une couche de revêtement (130) à une des surfaces d'un substrat polymère poreux (110) ; et
sécher la suspension pour préparer une couche de revêtement (130) pour former la couche de revêtement (130), dans lequel le deuxième polymère liant est sélectionné parmi un liant à base de polyvinylidène ayant une teneur de hexafluoropropylène (HFP) inférieure à 10 % en poids pour le poids total du liant à base de polyvinylidène, un liant à base de polyoléfine, et une combinaison de ces derniers ;
la teneur totale des particules inorganiques (135) dans la couche de revêtement (130) est 70 parties en poids ou plus sur la base de 100 parties en poids de la couche de revêtement (130) ;
le premier polymère liant et le deuxième polymère liant contenus dans la couche de revêtement ont un rapport en

poids de 4:6 à 6:4 ; et
le premier liant est un liant acrylique.

**11.** Procédé selon la revendication 10, dans lequel l'étape de mélangeage est effectuée en mélangeant pendant 1 heure ou plus et 3 heures ou moins.

**12.** Procédé selon la revendications 10 ou 11, dans lequel le séchage est effectué en séchant à une température qui diffère de la température de transition vitreuse du premier polymère liant de pas plus de 20°C, mesurée comme indiqué dans la description.

[Fig.1]

100
133
131
135
130
110
Lamination

[Fig.2]

Mixing step
S10
Application step
S30
Drying step
S50

[Fig.3]

1000
500
100
300

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Patent documents cited in the description


- KR 1020230026494
- KR 1020240007841
- KR 20160118979 A
- WO 2022071775 A1
- US 2018123106 A1